# EUROPEAN PATENT APPLICATION

(11) **EP 2 692 241 A1**
(43) Date of publication of application: **05.02.2014**
(21) Application number: 12179061.2
(22) Date of filing: 02.08.2012
(51) Int. Cl.: A23K 1/00, A23L 1/00, B02C 23/06

(54) **Food grade grinding aid composition**

(71) Applicant: Sika Technology AG, 6340 Baar (CH)
(72) Inventor: Lopez-Gonzalez, Waltter, 76000 Querétaro, Qro. C.P. (MX); Bernal-Rodriguez, Diego, 76180 Querétaro, Qro. C.P. (MX); Pimentel-Mendez, Pedro, 38180 Apaseo el Grande, Gto. C.P. (MX); Müller, Thomas, 69115 Heidelberg (DE)
(74) Representative: Sika Patent Attorneys

(57) **Abstract**

The present application is directed at food grade grinding aid compositions comprising a) one or more polyhydric alcohols having at least two protic groups or b) one or more carboxylic acids or c) mixtures thereof. The food grade grinding aid compositions are effective when used in the grinding process of limestone or hydrated lime which are important ingredients in food products such as corn tortillas and cattle feed supplement. The grinding aids of the present application allow for a substantial reduction in the grinding time to achieve a desired particle size and also provide products with a more uniform particle size distribution compared to samples prepared without the grinding aid.

## Description

The present invention is directed at a food grade grinding aid composition comprising a) one or more polyhydric alcohols having at least two protic groups or
b) one or more carboxylic acids or c) mixtures thereof. Such grinding aids can advantageously be used as an additive to limestone (CaCO₃) or hydrated lime (Ca(OH)₂), as it allows for a significant reduction of the grinding time to achieve a certain particle size compared to limestone or hydrated lime ground without the additive. The food grade grinding aid is thus advantageous for the preparation of ground limestone and hydrated lime which are important ingredients for the production of for example corn tortilla or as a cattle feed supplement.

### State of the Art

Today, most conventional grinding additives are applied during the grinding process of hydrated lime for the cement industry. In these applications, the additives are not specifically used as grinding aids and the compounds or compositions are primarily focussed on lime products for construction. Thus the major aim of these additives is to improve the physical properties of the ground lime products but not to increase the production rate during the grinding process. Such commercial products are for example available from Mapei as Mapei performance enhancer/A grinding aids for masonry cement.

In addition, M. Hasegawa et al. have described in "Effect and Behaviour of Liquid Additive Molecules in Dry Ultrafine Grinding of Limestone" KONA, No. 24 (2006), p. 213-220, that the grinding rate at the initial stage of grinding could be increased if alcohols such as methanol, ethanol, 1-propanol, ethylene glycol or propylene glycol are added to the limestone. In their study the most pronounced effects are observed for methanol and ethanol. It is also observed, that the grinding time could to some extent be reduced, if the alcohol is added stepwise instead of in one portion at the beginning of the grinding process.

The document only mentions the grinding aids to be useful in the cement industry and does not suggest the use of lime processed with these grinding aids in different fields. In addition, the document puts the focus on the provision of ultrafine powders of limestone for the preparation of which the grinding aid is added to pre-ground limestone having a particle size of below 200 mesh (75 µm).

In view of the above, there is a need for ground limestone and hydrated lime in the food industry, wherein the grinding aid has to fulfil the strict requirements of health and safety for food products. In addition, there is a need for alternative grinding aids which efficiently help to reduce the grinding time to obtain a specific particle size of the ground lime or hydrated lime. This grinding aid should preferably be cheap and should reduce the grinding time of limestone or hydrated lime, thus allowing a higher throughput in the lime mill. This is particularly important as the lime industry is growing and the grinding additive would thus help to increase lime production. The lime industry could also save considerable amounts of money in investments by using the grinding aid instead of investing in new equipment to increase the production in the existing factories.

The present application addresses these needs.

### Summary of the Invention

The present invention is directed at a food grade grinding aid composition comprising
a) one or more polyhydric alcohols having at least two protic groups or
b) one or more carboxylic acids or
c) mixtures thereof.

*"Food grade"* as this term is used in the context of the present invention, is defined by U.S. Food Chemical Codex (FCC, 6^{th} Edition, 2008) which defines the quality of *"food grade"* chemicals according to their identity, effects and purity on the basis of safety and good manufacturing practice (GMP). The wording *"food grade"* with regard to grinding aids requires that all ingredients of the grinding aid have to be food grade.

The term *"grinding aid"* is intended to mean, that the substance is added to a grinding process and is suitable to reduce the required energy for the coarse product to be ground to a certain particle size. A product qualifies as a grinding aid if it reduces the energy required for grinding the raw material to a certain size upon addition of the component to a comparative grinding process in which the component is omitted (with all other parameters identical) by at least 1%, preferably at least 2%.

*A "protic group"* in the context of the present invention means a functionality which can be deprotonated such as hydroxyl, amino, carboxy, etc.

In a preferred embodiment of the present application, the grinding aid composition in addition comprises water and optionally one or more antifungal and/or antibacterial agents.

In addition to hydroxyl the polyhydric alcohol may comprise other functional groups such as for example amino, amide or ester groups. Examples of the polyhydric alcohol include without limitation aliphatic or alicyclic polyhydric alcohols. A preferred dihydric alcohol for use in the present application is propylene glycole.

It is preferred that the polyhydric alcohol has at least three protic groups. More preferably, the polyhydric alcohol is a compound having 3 to 6 hydroxyl groups. Specific examples of such polyhydric alcohol include without limitation glycerol, butane triols, diglycerol, triglycerol, various butane triols, various pentane triols, various hexane triols, various heptane triols, pentaerytrol and sugar alcohols such as sorbitol and mannitol. Among polyhydric alcohols trihydric alcohols, preferably comprising 3 to 6 carbon atoms, are preferred. More preferably, the trihydric alcohol is glycerol.

The one or more polyhydric alcohols may be included into the composition in an amount of from about 10 to 95 wt.-%, preferably in an amount of from about 15 to 50 wt.-% and most preferably in an amount of from about 20 to 40 wt.-%.

In another embodiment, as stated above, the grinding aid may comprise one or more carboxylic acids. For the carboxylic acid, it is preferred that it is an aliphatic carboxylic acid such as formic acid, acetic acid, propionic acid, butyric acid, valeric acid, hexanoic acid, heptanoic acid, octanoic acid, nonanoic acid, decanoic acid, undecanoic acid, etc. The carboxylic acid may also be branched or comprise more than one carboxylic acid functionality and may contain an unsaturation in the aliphatic backbone. It is preferred, however, that the carboxylic acid comprises 1 to 6, more preferably 1 to 3 carbon atoms. In a particularly preferred embodiment, the carboxylic acid is acetic acid.

It is preferred that the amount of the carboxylic acid in the composition is in the range of from about 0.1 to 10 wt.-%, preferably in the range of from about 1 to 5 wt.-% and most preferably in the range of about 1 to 2 wt.-%, based on the total weight of the composition.

In yet another preferred embodiment of the present invention, the food grade grinding aid composition comprises both one or more polyhydric alcohols having at least two protic groups and one or more carboxylic acids. In this case, the content of the carboxylic acid is in the same range as indicated above, while the preferred content of one or more polyhydric alcohols having at least three protic groups is in the range of from about 5 to 50 wt.-%, preferably in the range of from about 10 to 40 wt.-% and most preferably in the range of from about 20 to 30 wt.-%.

The compositions comprising a polyhydric alcohol as the major active ingredient of the grinding aid preferably comprises about 4 to 90 wt.-% of water, preferably about 30 to 85 wt.-% of water and most preferably about 45 to 78 wt.-% water.

Grinding aid compositions comprising one or more carboxylic acid preferably comprise about 4 to 95 wt.-% of water, preferably about 20 to 85 wt.-% of water and most preferably between about 50 and 80 wt.-% of water, based on the total weight of the composition.

In grinding aid compositions comprising at least one polyhydric alcohol and at least one carboxylic acid, the preferred water content matches that for compositions comprising a polyhydric alcohol as the major active ingredient.

A preferred antifungal and/or antibacterial agent is sodium benzoate and potassium sorbate which are available for example in admixture as Microcare SB from Thor Personal Care.

The one or more antifungal and/or antibacterial agents are preferably added to the grinding aid composition in an amount of up to about 5 wt.-%, preferably in an amount of from about 0.1 to 3 wt.-% and most preferably in an amount of from about 0.5 to 2 wt.-%.

If an antifungal and/or antibacterial agent is added it must be made sure that it is added in an amount sufficient to provide the desired antifungal and/or antibacterial action. It is thus further preferred that the antifungal and/or antibacterial agent is added in amounts of at least about 0.001 wt.-%, more preferably at least about 0.1 wt.-%.

It is noted, that in all compositions the total amount of components in wt.-% is 100 wt.-%.

In the lime industry, it is preferred that the number of additives in a grinding aid is as low as possible. Thus, the requirement to store a lot of different compounds and mix them in the desired ratio is simplified. In a preferred embodiment, thus, the food grade grinding aid composition consists essentially of a polyhydric alcohol having at least two protic groups, water and one or two antifungal and/or antibacterial agents. In another preferred embodiment, the food grade grinding aid composition consists essentially of a carboxylic acid, water and one or two antifungal and/or antibacterial agents. In yet another preferred embodiment the food grade grinding aid composition consists essentially of a polyhydric alcohol having at least two protic groups, a carboxylic acid, water and one or two antifungal and/or antibacterial agents.

A further aspect of the present invention is directed at the use of a grinding aid composition as described above for grinding limestone (CaCO₃) and/or hydrated lime (Ca(OH)₂).

The present invention is also directed at a method of grinding limestone (CaCO₃) and/or hydrated lime (Ca(OH)₂) comprising adding a food grade grinding aid composition as described above to unprocessed (non-ground) CaCO₃ and/or hydrated lime (Ca(OH)₂), and subjecting the mixture to grinding.

In the context of the present application, the wording *"unprocessed"* or *"non-ground"* means that the CaCO₃ and/or Ca(OH)₂ has not been processed to its final particle size. This means, that *"unprocessed"* also applies to CaCO₃ and/or Ca(OH)₂ which has been processed in e.g. a jaw crusher to bring the material into the proper size for grinding with the food grade grinding composition.

In the method described above, it is preferred that the mixture of unprocessed (non-ground) CaCO₃ and/or Ca(OH)₂ is ground in a ball mill. It is also preferred that the grinding aid is added to the limestone or hydrated lime when the material still has a particle size in excess of 75 µm, preferably, wherein at least 98 wt.-% of the material has a particle size in excess of 75 µm.

Moreover, it is preferred that the food grade grinding aid composition is added to the unprocessed (non-ground) CaCO₃ and/or Ca(OH)₂ in an amount of up to 1 wt.-% (based on the total weight of the mixture), more preferably of up to 0.2 wt.-%, and even more preferably in an amount of from about 0.03 to 0.12 wt.-%. The grinding aid composition should be added to the limestone or hydrated lime in an amount sufficient to result in a significant reduction of the grinding time to the desired particle size. Preferably the grinding aid composition should be added in an amount of at least about 0.001 wt.-%, more preferably of at least about 0.01 wt.-%.

With regard to the grinding time, the method of the present invention is not subject to any relevant restrictions. It is preferred, however, that the mixture is subjected to grinding for a time sufficient to convert at least 90 wt.-%, preferably at least 95 wt.-% and most preferably at least 98 wt.-% of the CaCO₃ and/or Ca(OH)₂ to particles with a size of less than 75 µm. This particle size is determined with a mesh 200 sieve.

Yet another aspect of the present invention is ground limestone (CaCO₃ and/or hydrated lime (Ca(OH)₂) obtainable by the above-described method. This ground limestone and/or hydrated lime can advantageously be used as a food additive, in particular for corn tortillas or as a cattle feed supplement.

In the following, the present invention is described by the way of examples, which however are not intended to limit the scope of the present application by any means.

### Example 1

Samples of Ca(OH)₂ are ground in a ball mill TTS-100 model from Siebtechnik. Each sample is evaluated considering the wt.-% of retained material in a 200 mesh sieve (75 µm) as a quality parameter. The same procedure is done to evaluate each grinding aid. The dosage of all grinding aids evaluated is 0.03 wt.-% of hydrated lime.

As grinding aids the following compositions have been investigated:
Comparative Sample 1: Acetic acid 2.7%, triethanolamine 26.7%, calciumlignosulphate liquid 0.1 wt.-% with the rest being water.
Sample 1: Glycerol 50 wt.-%, water 49 wt.-%, Microcare SB 1 wt.-%.
Sample 2: Glycerol 30 wt.-%, water 69 wt.-%, Microcare SB 1 wt.-%
Sample 3: Glycerol 15 wt.-%, water 84 wt.-%, Microcare SB 1 wt.-%
(Microcare SB = sodium benzoate and potassium sorbate in water),

The results of the investigations are provided in Table 1 below.

**Table 1. Material retained (%) on No. 200 sieve (75 µm) of Ca(OH)₂ samples ground in a laboratory mill**

| **Sample** | **Grinding Time (min)** | **%Retained on No. 200 sieve** | | | | |
|---|---|---|---|---|---|---|
| | | **Blank** | Comparative Sample 1 | Sample 1 | Sample 2 | Sample 3 |
| 1 | 5.8 | 22.7 | 19.1 | 18.2 | 13 | 16.2 |
| 2 | 11.6 | 13.5 | 9.3 | 9.5 | 8.1 | 9.3 |
| 3 | 17.4 | 10.9 | 6 | 4.8 | 5.2 | 4.8 |
| 4 | 23.2 | 7.4 | 4 | 3.3 | 4 | 3.7 |
| 5 | 29 | 6 | 3.3 | 2.6 | 3.3 | 2.8 |
| 6 | 34.8 | 3.6 | 2.2 | 2.1 | 1.9 | 2 |
| 7 | 40.6 | 3.3 | 2.1 | 2.1 | 1.7 | 2 |
| 8 | 46.4 | 3.3 | 1.2 | 1.2 | 1.7 | 1.5 |
| 9 | 52.2 | 2.7 | 1.2 | 1 | 0.9 | 1 |
| 10 | 58 | 2.5 | 1 | 0.9 | 0.8 | 0.9 |

As can be taken from Table 1, all experimental grinding aids provide grinding times which are at least equal to and in some cases even better than the time for Comparative Sample 1 which is not a food grade grinding agent. In all cases, a product wherein about 98 wt.-% of the material passed through a 200 mesh sieve is reached after about 40 minutes grinding time, while such material is not obtained for the blank sample (without grinding aid) even after 58 minutes.

Based on these results, the grinding efficiency for each sample to reach 3.3% of retained material on a mesh 200 sieve is calculated with regard to the blank sample. As can be seen from the following Table 2, the grinding aid showing the best grinding efficiency is Sample 1 with a 42.8% improvement in grinding efficiency over the blank with no grinding aid.

**Table 2. Grinding efficiency on Ca(OH)₂ grinding with different grinding aids**

| **Grinding Aid →** | **Blank** | Comparative Sample 1 | Sample 1 | Sample 2 | Sample 3 |
|---|---|---|---|---|---|
| Time to reach same fineness (No. 200 sieve), min | 40.6 | 29.0 | 23.2 | 29.0 | 29.0 |
| Grinding Efficiency, % | N.A. | 28.5 | 42.8 | 28.5 | 28.5 |

### Example 2

Two commercial hydrated lime products (Calidra and Quimex) are compared with and without grinding aid Sample 1 in a compressive strength test. The tests are carried out according to the ASTM C-311 procedure, wherein 30% of ordinary Portland cement is replaced by hydrated lime. Water mixes using hydrated lime require 40 ml more water than the blank (cement only) to reach flow established by the ASTM standard. Table 3 shows the mortar results on the plastic state: w/b and flow.

**Table 3. Water/binder ratios and flow results on cement mixes and laboratory produced lime**

| **Test Cement substitution (by lime): 30%** | **w/b** | **Flow (%)** |
|---|---|---|
| *Cement (without grinding aid)* | 0.484 | 86 |
| Cement + Lime Calidra | 0.564 | 91 |
| Cement + Lime Quimex | 0.570 | 90 |
| Cement -Lime + Sample -1 | 0.540 | 89 |

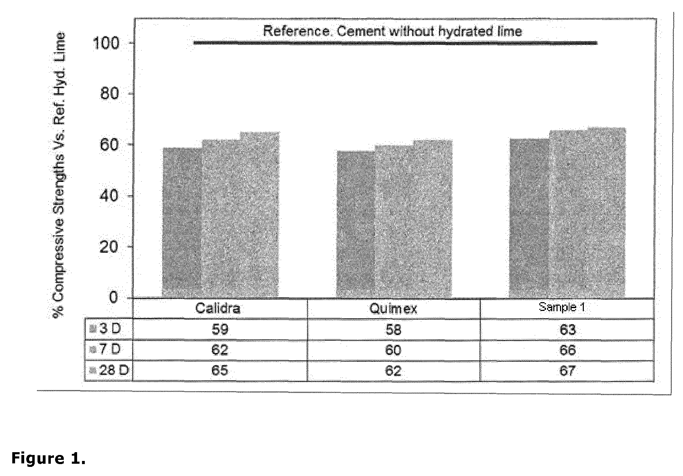

Figure 1 shows the strength activity index (in %) at 3, 7 and 28 days according to the blank and comparing to the references Calidra and Quimex. The best results are obtained with the hydrated lime sample produced with the grinding aid Sample 1 which shows that a better particle size distribution is reached using this admixture than without using it. This clearly demonstrates that the claimed grinding aids improve the particle size distribution of lime in industrial mills and it has no negative effect on the performance of hydrated lime as a construction material.

### Example 3

CaCO₃ is crushed in a jaw crusher and then ground in a ball mill TTS-100 from Siebtechnik. Each sample is evaluated considering the % of retained material in a 200 mesh (75 µm) sieve, as a quality parameter. The same procedure is used to evaluate each grinding aid proposed.

Four laboratory grindings are examined as listed below:
1. CaCO₃ blank (without grinding aids)
2. CaCO₃ + 0.05 wt.-% of Sample 2
3. CaCO₃ + 0.025 wt.-% of Sample 2
4. CaCO₃ + 0.1 wt.-% of Sample 2

The grinding efficiency is determined based on the fineness results (wet method). The sieves used are: No. 30 (600 µm), No. 60 (250 µm) and No. 200 (75 µm). The results of retained material on No. 200 sieve and the grinding efficiency with the grinding aids are evaluated. The best results are obtained using the grinding aid of Sample 2 at 0.05 wt.-% with the efficiency being increased 5 % compared to the blank with no grinding aid. The optimal dosage of this grinding aid is determined as 0.05 wt.-%, because the efficiency using 0.25 and 0.1 wt.-% is lower compared with 0.05%. The results of these tests are given in Table 4 below:

**Table 4: Mesh 200 sieve fineness of CaCO₃ ground in a ball mill until 2800 revolutions and % of grinding efficiency**

| | Blank (without grind aid) | Sample 2 (0.05 wt.-%) | Sample 2 (0.025 wt.-%) | Sample 2 (0.1 wt.-%) |
|---|---|---|---|---|
| Retention M200 | 17.69 | 14.48 | 16.21 | 14.83 |
| % Efficiency | | 5.02 | 1.48 | 2.86 |

## Claims

1. A food grade grinding aid composition comprising
a) one or more polyhydric alcohols having at least two protic groups or
b) one or more carboxylic acids or
c) mixtures thereof.

2. The composition of claim 1 further comprising water and optionally one or more antifungal and/or antibacterial agents.

3. The composition of claim 1 or 2 wherein the polyhydric alcohol is a trihydric alcohol, preferably comprising 3 to 6 carbon atoms, most preferably glycerol.

4. The composition of claim 1 to 3 wherein the carboxylic acid is an aliphatic carboxylic acid, preferably having 1 to 6, more preferably 1 to 3 carbon atoms.

5. The composition of claim 4 wherein the carboxylic acid is acetic acid.

6. The composition of claims 1 to 3 comprising about 4 to 89 wt.-% water, about 10 to 95 wt.-% of one or more polyhydric alcohols and up to about 5 wt-% of the one or more antifungal and or antibacterial agents.

7. The composition of claims 1 to 5 comprising about 4 to 95 wt.-% water, about 0.1 to 10 wt.-% of one or more carboxylic acids and up to about 5 wt-% of the one or more antifungal and or antibacterial agents.

8. Use of a composition according to any one of claims 1 to 7 for grinding CaCO₃ and /or Ca(OH)₂.

9. A method of grinding CaCO₃ and /or Ca(OH)₂ comprising
- adding a food grade grinding aid composition according to any one of claims 1 to 7 to unprocessed (non-ground) CaCO₃ and /or Ca(OH)₂, and
- subjecting the mixture to grinding.

10. The method according to claim 9 wherein the mixture is subjected to grinding in a ball mill.

11. The method of claim 9 or 10 wherein the food grade grinding aid composition is added to the CaCO₃ and /or Ca(OH)₂ in an amount of up to about 1 wt.-%, preferably in an amount of up to about 0.2 wt.-%, and more preferably in an amount of from about 0.03 to 0.12 wt.-%.

12. The method of any one of claims 9 to 11 wherein the mixture is subjected to grinding for a time sufficient to convert at least about 90 %, preferably at least about 95 % and most preferably at least about 98 % of the CaCO₃ and /or Ca(OH)₂ to particles with a size of less than 75 µm.

13. Ground CaCO₃ and /or Ca(OH)₂ obtainable by a method according to anyone of claims 9 to 12.

14. Use of ground CaCO₃ and /or Ca(OH)₂ according to claim 13 as a food additive, preferably as cattle feed supplement.
